(19) Europäisches Patentamt
European Patent Office
Office européen des brevets

(11) Veröffentlichungsnummer: **0 075 239**
**B1**

(12) # EUROPÄISCHE PATENTSCHRIFT

(45) Veröffentlichungstag der Patentschrift: **15.01.86**

(51) Int. Cl.⁴: **C 08 G 73/16**, C 09 D 5/25, H 01 B 3/42

(21) Anmeldenummer: **82108425.8**

(22) Anmeldetag: **13.09.82**

(54) **Verfahren zur Herstellung wässriger hitzehärtbarer Elektroisolierlacke und deren Verwendung.**

(30) Priorität: **19.09.81 DE 3137385**

(43) Veröffentlichungstag der Anmeldung: **30.03.83 Patentblatt 83/13**

(45) Bekanntmachung des Hinweises auf die Patenterteilung: **15.01.86 Patentblatt 86/3**

(84) Benannte Vertragsstaaten: **AT BE CH DE FR GB IT LI NL SE**

(56) Entgegenhaltungen:
**AT-B-336 748**
**US-A-3 425 866**

**Die Akte enthält technische Angaben, die nach dem Eingang der Anmeldung eingereicht wurden und die nicht in dieser Patentschrift enthalten sind.**

(73) Patentinhaber: **Dr. Beck & Co. AG, Grossmannstrasse 105, D-2000 Hamburg 28 (DE)**

(72) Erfinder: **Reiter, Udo, Dr., Pfalzring 166, D-6704 Mutterstadt (DE)**
Erfinder: **Lehmann, Helmut, Hasenstieg 5, D-2057 Reinbek (DE)**

(74) Vertreter: **Rämisch, Friedrich, Dr., Carl- Bosch-Strasse 38, D-6700 Ludwigshafen (DE)**

EP 0 075 239 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung wäßriger hitzehärtbarer Elektroisolierlacke auf Basis von Polyesterimiden und deren Verwendung als Drahtlacke und Tränklacke.

Aus der DE-AS 16 45 435 ist bekannt Polyesterimid(= PEI)-Drahtlacke durch Zusatz von cyclischen Trimeren von Diisocyanaten, bei denen die freien Isocyanatgruppen mit Phenolen oder Kresolen blockiert sind, z.B. Trimeren von 2,4-Tolylendiisocyanat, die mit Phenol verkappt sind das thermische Niveau des Lackes anzuheben. Das hierfür verwendete Polyesterimid-Harz wurde gemäß DE-AS 14 45 263 hergestellt, wobei das Vorkondensat in einem Lösungsmittel oder einem Lösungsmittelgemisch, wie Kresol, Xylol, Xylenol und/oder Solventnaphtha gelöst ist. Zu den so her gestellten Lacken, die üblicherweise einen Feststoffgehalt von 20 bis 30 % aufweisen, können Trimere von Diisocyanaten, bei denen die freien Isocyanatgruppen verkappt sind, hinzugemischt werden, da diese Stoffe ebenfalls in diesen Lösungsmitteln löslich sind: Mit diesen Lacken lackierte Cu-Drähte zeigen besonders hinsichtlich des Hitzeschocks und der Schmorfestigkeit verbesserte Eigenschaften gegenüber den reinen Tris-(2-hydroxyethyl)-isocyanurat (=THEIC)-modifizierten PEI-Drahtlacken. Diese Lacke weisen jedoch wesentliche Nachteile auf, da sie auf grund der niedrigen Feststoffgehalte von ca. 20 bis 30 % und des Einsatzes von teuren Lösungsmitteln unwirtschaftlich sind und die hierbei verwendeten Lösungsmittel einen sehr unangenehmen Geruch haben. Zur Vermeidung von Umweltbelastungen und aus Gründen der Arbeitsplatzhygiene sind daher sehr aufwendige Nachverbrennungsanlagen notwendig.

Es sollten daher umweltfreundliche Systeme zur Verfügung gestellt werden. Ein besonders umweltfreundliches und kostengünstiges System stellt der Wasserlack dar.

Will man einen Wasserlack mit den gleichen Eigenschaften wie oben beschrieben herstellen, kann man die konventionelle Herstellweise nicht übernehmen. Zu einem zuvor bereiteten Wasserlack kann man die eigenschaftsverbessernde Komponente nicht hinzugeben, da diese nicht wasserlöslich ist.

Aus AT-A 336 748 war ein Verfahren zur Herstellung von wasserverdünnbaren Elektroisolierlacken auf Polyesterimidbasis bekannt, die aus aromatischen Tricarbonsäureanhydriden, Diaminen, Diolen und einen Isocyanuratring enthaltenden Triolen hergestellt, mit Aminen umgesetzt und mit Wasser verdünnt werden.

In US-A-3 425 866 wird ein mit einer Polyesterimid-und einer Polyesterschicht überzogener elektrischer Leiter beschrieben, wobei mindestens 20 % der Alkoholkomponenten des Polyester teils aus Trishydroxyethylisocyanurat bestehen. Diese Polyesterimide werden in organischen Lösungsmittel hergestellt und ihren Vorkondensaten können trimere Diisocyanate mit Kresol-verkappten NCO-Gruppen zugesetzt werden.

Aufgabe der vorliegenden Erfindung ist es, ein Verfahren zur Herstellung wäßriger PEI-Lacke aufzuzeigen das die oben aufgeführten Nachteile nicht aufweist und zu wäßrigen Lacken führt, die sich zu Lackierungen mit besonders vorteilhaften Eigenschaften verarbeiten lassen.

Überraschenderweise läßt sich diese Aufgabe dadurch besonders vorteilhaft lösen, daß man das cyclische Trimerisierungsprodukt eines Diisocyanats, dessen freie Isocyanatgruppen verkappt sind, bei der Polyesterimidvorkondensatherstellung mit einkondensiert.

Gegenstand der vorliegenden Erfindung ist ein Verfahren zur Herstellung wäßriger hitzehärtbarer Elektroisolierlacke auf Basis von Polyesterimiden die durch Kondensation von aromatischen Tricarbonsäuremonoanhydriden, Diaminen, Diolen und einen Isocyanuratring enthaltenden Triolen sowie gegebenenfalls aromatischen Dicarbonsäuren oder deren veresterbaren Derivaten erhalten werden, das dadurch gekennzeichnet ist, daß

(A) ein aromatisches Tricarbonsäuremonoanhydrid,

(B) ein aromatisches Diamin,

(C) ein einen Isocyanuratring enthaltendes Triol,

(D) ein aliphatisches Diol und

(E) ein cyclisches Trimerisierungsprodukt eines Diisocyanats, dessen freie Isocyanatgruppen verkappt sind, sowie gegebenenfalls

(F) eine aromatische Dicarbonsäure oder deren veresterbaren Derivate,

bei 120 bis 240° C miteinander kondensiert werden, wobei entstehendes Wasser, abgespaltenes Verkappungsmittel und überschüssiges Diol destillativ entfernt werden, das so erhaltene Vorkondensat, gegebenenfalls nach Zugabe von 1 bis 10 Gew.%, bezogen auf Polyesterimidvorkondensat, eines oberhalb 100° C bei Normaldruck siedenden polaren organischen Lösungsmittels, mit Ammoniak oder einem organischen Amin bei 50 bis 200°C umgesetzt und anschließend mit vollentsalztem Wasser auf Viskositäten zwischen etwa 100 und etwa 10.000 m Pa.s verdünnt sowie gegebenenfalls mit vollentsalztem Wasser verdünnt sowie gegebenenfalls mit einem Zusatz eines wasserlöslichen Härtungskatalysators versehen wird.

Gegenstand der vorliegenden Erfindung ist außerdem die Verwendung der erfindungsgemäß hergestellten wäßrigen Elektroisolierlacke als Drahtlacke oder Tränklacke. Nach dem erfindungsgemäßen Verfahren läßt sich auf einfache Weise ein Wasserlack mit hervorragenden Eigenschaften herstellen. Man erhält so ca. 45-bis 55%ige Lacklösungen, mit denen sich, z.B. nach Zugabe eines üblichen wasserlöslichen Härtungskatalysators

Kupferdrähte mittels üblicher Auftragssysteme und -vorrichtungen lackieren lassen.

Die unter Verwendung der nach dem erfindungsgemäßen Verfahren hergestellten wäßrigen PEI-Lacke erhaltenen lackierten Drähte zeigen eine wesentlich verbesserte Schmorfestigkeit und einen wesentlich besseren Wärme schock als mit konventionellen THEIC-PEI-Lacken lackierte Drähte. Die Schmorfestigkeit der mit den erfindungsgemäßen wäßrigen Lacken erhaltenen Drahtlackierungen ist sogar besser als die mit den in organischen Lösungsmitteln gelösten THEIC-PEI-Lacken, die den Zusatz von cyclischen Trimeren von Diisocyanaten, deren freie Isocyanatgruppen verkappt sind, als eigenschaftsverbessernde Komponente enthalten.

Zu den für das erfindungsgemäße Verfahren zu verwendenden Aufbaukomponenten und Einsatzstoffen ist im einzelnen folgendes auszuführen.

(A) Als aromatische Tricarbonsäuremonoanhydride (A) kommen z.B. in Betracht Trimellithsäureanhydrid, 3,4,3'-Benzophenontricarbonsäureanhydrid und Hemimellithsäureanhydrid, wobei Trimellithsäureanhydrid bevorzugt wird.

(B) Als aromatische Diamine (B) eignen sich vorzugsweise solche mit primären Aminogruppen die an aromatische Gruppen gebunden sind, z.B. solche der allgemeinen Formel

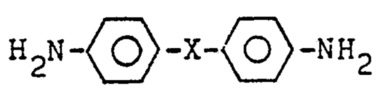

wobei X für einen zweiwertigen Rest, z.B. $-CH_2-$ 0-,-CO-,-S-oder-$SO_2$- steht. Beispiele für derartige Diamine sind Diaminodiphenylmethan, Diamino diphenyloxid und Benzophenondiamin.

(C) Als Triole mit Isocyanuratring (C) eignen sich Trishydroxyethylisocyanurat, Trishydroxypropylisocyanurat, insbesondere Trishydroxiethylisocyanurat (=THEIC). Gegebenenfalls können in untergeordneten Mengen von bis zu 10 Mol%, bezogen auf die Gesamtheit der Triole, auch andere Triole, wie z.B. Glycerin, mitverwendet werden.

(D) Als Diole (D) kommen übliche zweiwertige aliphatische Alkohole in Frage, wie Butandiol-1,4, Trimethylenglykol, vorzugsweise Ethylenglykol.

(E) Als cyclische Trimerisierungsprodukte von Diisocyanaten, deren freie Isocyanatgruppen verkappt sind, kommen in Betracht Trimerisierungsprodukte üblicher aromatascher Diisocyanate, wie z.B. das Trimerisierungsprodukt von 2,4-Toluylendiisocyanat, wobei die noch verbleibenden Isocyanatgruppen verkappt werden (z.B. ® Desmodur CT stabil der Fa. Bayer AG). Als Verkappungsmittel eignen sich z.B. OHacide Verkappungsmittel. Bevorzugte Verkappungsmittel sind Phenol und Kresole.

(F) Gegebenenfalls mitzuverwendende geeignete aromatische Dicarbonsäuren und deren veresterbare Derivate (F) sind z.B. Terephthalsäure, Isophthalsäure, Benzophenon-4,4'-dicarbonsäure, Ester aromatischer Dicarbonsäuren, wie z.B. die Ester der Terephthalsäure mit niederen 1 bis 3 Kohlenstoffatome enthaltenden Alkoholen, z.B. Dimethylterephthalat, Dimethylisophthalat Diethylterephthalat.

Zur Herstellung der Vorkondensate werden die Komponenten (A) bis (C) und (F) im allgemeinen in einem Molverhältnis von (A):(B):(C):(F) von 2,2 bis 1,8/1/0,5 bis 1,5/0 bis 0,5, vorzugsweise 2,1 bis 1,9/1/0,7 bis 0,8/0 bis 0,2 eingesetzt.

Komponente (E) wird im allgemeinen in einer Menge von 5 bis 15, vorzugsweise 10 bis 14 Gewichtsprozent, bezogen auf die Gesamtmenge der Komponenten (A) + (B) + (C) + (F) eingesetzt. Die bei der Herstellung der erfindungsgemäßen Vorkondensate mitzuverwendende Komponente (D) dient gleichzeitig als Lösungsmittel und wird im allgemeinen in Mengen von 20 bis 200 vorzugsweise 40 bis 100 Gewichtsprozent bezogen auf die Gesamtmenge der Komponenten (A) + (B) + (C) + (E) + (F) verwendet.

Die Herstellung der erfindungsgemäß einzusetzenden Vorkondensate erfolgt im allgemeinen bei Temperaturen von 120 bis 240 vorzugsweise 140 bis 210°C. Komponente (D), das aliphatische Diol, liegt im Vorkondensatharz zum Teil einkondensiert, zum Teil jedoch auch in freier Form vor.

Bei der Vorkondensatbildung entstehendes Wasser, abgespaltenes Verkappungsmittel und überschüssiges Diol werden destillativ entfernt.

Die Herstellung des Vorkondensats ist beendet wenn das Harz eine kinematische Viskosität von $\eta = 16$ bis 32 $mm^2 sec^{-1}$ (gemessen an einer N-Methylpyrrolidon/Harz(2:l)-Lösung mit einem Ubbelohde-Viskosimeter Nr. 3 bei 30°C) erreicht hat.

Dem Vorkondensat können noch 1 bis 10 Gew.% eines oberhalb 100°C bei Normaldruck siedenden polaren, vorzugsweise wassermischbaren organischen Lösungsmittels zugesetzt werden. Als solche kommen z.B. N-Methylpyrrolidon, Glykole, wie Ethylenglykol Glykolether, wie Butylglykol, Methyldiglykol, Ethyldiglykol, Butyldiglykol oder andere polare Lösungsmittel, wie Dimethylformamid oder Dimethylacetamid in Betracht.

Das PEI-Vorkondensat wird erfindungsgemäß bei 50 bis 200, vorzugsweise 90 bis 150°C mit Ammoniak, vorzugsweise wäßrigem Ammoniak, oder einem organischen Amin, beispielsweise einem Alkanolamin, umgesetzt und anschließend mit vollentsalztem Wasser auf Viskositäten zwischen etwa 100 und etwa 10.000 mPa.s verdünnt.

Die PEI-Vorkondensatlösung, die zweckmäßigerweise auf 20 bis 50°C abgekühlt wird, kann noch mit 0,1 bis 5, vorzugsweise 2 bis 4 Gew.%, bezogen auf PEI-Vorkondensat, eines

wasserlöslichen Härtungskatalysators vermischt werden. Als solche wasserlösliche Härtungskatalysatoren eignen sich vorzugsweise wasserlösliche Titanate, wie z.B. Titantetralactat oder Triethanolamintitanat.

In dieser Form können die erfindungsgemäß hergestellten Polyesterimidlösungen direkt zur Lackierung von Drähten, z.B. von Kupferdrähten oder als Tränklacke zur Imprägnierung von Lackdrahtwicklungen verwendet werden. Als Applikationsverfahren und -vorrichtungen kommen die für diese Zwecke üblichen in Frage.

Das Einbrennen der Lackierungen erfolgt im allgemeinen bei Temperaturen von 200 bis 550, vorzugsweise 400 bis 520° C.

Die erfindungsgemäß hergestellten wäßrigen hitzehärtbaren Polyesterimidlacke sind gut lagerstabil, völlig klar ("blank") und weisen keinen unangenehmen Geruch auf. Die damit erhalten Lackierungen zeigen hervorragende Eigenschaften auch bezüglich des Wärmeschocks und des Wärme alterungsverhaltens (Schmorfestigkeit). Besondere Vorteile der erfindungsgemäß hergestellten wäßrigen PEI-Lacke sind ihre Umweltfreundlichkeit, ihre einfache und gefahrlose Handhabung sowie die hohen Feststoffgehalte (von über 50 Gewichtsprozent) bei Lackierviskosität.

Die in den folgenden Beispielen genannten Teile und Prozente sind, soweit nicht anders angegeben, Gewichtsteile und Gewichtsprozente.

**Beispiel 1**

In einem Reaktionsgefäß, ausgerüstet mit einem Rührer, Destillationsaufsatz und Innenthermometer werden 256 Teile Trimellithsäureanhydrid, 132 Teile Diaminodiphenylmethan, 121,8 Teile (Tris-(2-hydroxyethyl)-isocyanurat, 60,5 Teile eines Phenol-verkappten Trimeren von 2,4-Tolylendiisocyanat und 800 Teile Ethylenglykol gegeben. Anschließend wird die Temperatur innerhalb von 8 Stunden auf 200°C erhöht. Dabei destillieren zunächst 375 Teile ab. Anschließend werden unter Vakuum (120 mbar) noch einmal 367 Teile abdestilliert. Man erhält ein Vorkondensat mit einer kinematischen Viskosität von 22 $mm^2s^{-1}$ (gemessen als Lösung, hergestellt aus 1 Teil Harz und 2 Teilen N-Methylpyrrolidon, mit dem Ubbelohde-Viskosimeter Nr. 3 bei 30°C). Nach dem Abkühlen auf 110°C werden 26,4 Teile N-Methylpyrrolidon zugegeben und anschließend 253,6 Teile Ammoniak (25%ige wäßrige Lösung) während 1 Stunde zugegeben. Mit 85 Teilen vollentsalztem Wasser wird auf eine Lackierviskosität von 65 Sekunden (DIN-Becher Auslaufdüse 4 mm) bei einem Feststoffgehalt von 54,0 % (1 Stunde/180°C) eingestellt. Anschließend gibt man 21 Teile Titantetralactat hinzu. Mit diesem so hergestellten Lack wurde 0,5 mm Cu-Draht unter Verwendung einer üblichen Drahtlackiermaschine lackiert (Ofenlänge 2,50 m Ofentemperatur 460°C).

Prüfungen am Lackdraht nach DIN 46 453:
Schmorzeit 350°C 1968 min
370°C 780 min
390°C 332 min
420°C 172 min
Wärmeschock 10 % VD 1xD 250°C i.0. Wärmedruck 330° C

**Beispiel 2**

In einem üblichen Kondensationsgefäß werden 1080 Teile Trimellithsäureanhydrid, 556 Teile Diaminodiphenylmethan, 514 Teile Trishydroxyethylisocyanurat, 255 Teile eines Phenol -verkappten Trimeren von 2,4-Tolylendiisocyanat und 1546 Teile Ethylenglykol gegeben. Anschließend wird die Temperatur innerhalb von 8 Stunden auf 200°C erhöht. Dabei destillieren zunächst 650 Teile ab. Danach werden unter Vakuum (70 mbar) noch einmal 747 Teile abdestilliert. Man erhält ein Vorkondensat mit einer kinematische Viskosität von 24 $mm^2s^{-1}$ (gemessen als Lösung, hergestellt aus 1 Teil Harz und 2 Teilen N-Methylpyrrolidon, mit dem Ubbelohde- Viskosimeter Nr. 3 bei 30°C). Nach dem Abkühlen auf 130°C werden 79 Teile N-Methylpyrrolidon und anschließend 1060 Teile Ammoniak (25%ige wäßrige Lösung) während 1 Stunde zugegeben. Mit 1260 Teilen vollentsalztem Wasser wird auf eine Lackierviskosität von 60 sek (DIN-Becher, Auslaufdüse 4 mm) bei einem Feststoffgehalt von 50,0 % (1 Stunde/180° C) eingestellt. Danach gibt man 106 Teile Titantetralactat hinzu. Mit diesem so hergestellten Lack wurde 0,5 mm Cu-Draht unter Verwendung einer üblichen Drahtlackiermaschine lackiert (Ofenlänge 2,50 m, Ofentemperatur 460°C).

Prüfungen am Lackdraht nach DIN 46 453
Schmorzeit 350° C 702 min
370°C 352 min
380°C 201 min
420°C 37 min
Wärmeschock 1 x D 300°C i.0.
Wärmedruck 290°

**Patentansprüche**

1. Verfahren zur Herstellung wäßriger hitzehärtbarer Elektroisolierlacke auf Basis von Polyesterimiden, die durch Kondensation von aromatischen Tricarbonsäuremonoanhydriden, Diaminen, Diolen und einen Isocyanuratring enthaltenden Triolen sowie gegebenenfalls aromatischen Dicarbonsäuren oder deren veresterbaren Derivaten erhalten werden dadurch gekennzeichnet daß

(A) ein aromatisches

Tricarbonsäuremonoanhydrid,

(B) ein aromatisches Diamin,

(C) ein einen Isocyanuratring enthaltendes Triol,

(D) ein aliphatisches Diol und

(E) ein cyclisches Trimerisierungsprodukt eines Diisocyanats, dessen freie Isocyanatgruppen verkappt sind, sowie gegebenenfalls

(F) eine aromatische Dicarbonsäure oder deren veresterbaren Derivate,

bei 120 bis 240°C miteinander kondensiert werden, wobei entstehendes Wasser, abgespaltenes Verkappungsmittel und überschüssiges Diol destillativ entfernt werden, das so erhaltene Vorkondensat gegebenenfalls nach Zugabe von 1 bis 10 Gew.%, bezogen auf Polyesterimidvorkondensat, eines oberhalb 100°C bei Normal druck siedenden polaren organischen Lösungsmittels, mit Ammoniak oder einem organischen Amin bei 50 bis 200°C umgesetzt und anschließend mit vollentsalztem Wasser auf Viskositäten zwischen etwa 100 und etwa 10.000 mPa.s verdünnt sowie gegebenenfalls mit einem Zusatz eines wasserlöslichen Härtungskatalysators versehen wird.

2. Verfahren nach Anspruch 1, dadurch gekennzeichnet, daß als Komponente (C) Tris-(2-hydroxyethyl)-isocyanurat verwendet wird.

3. Verfahren nach Anspruch 1 oder 2, dadurch gekennzeichnet, daß als Komponente (E) das cyclische Trimerisierungsprodukt von Toluylendiisocyanat, dessen freie Isocyanatgruppen mit Phenol oder Kresol verkappt sind, verwendet wird.

4. Verfahren nach einem der vorhergehenden Ansprüche, dadurch gekennzeichnet, daß zur Herstellung des Vorkondensats die Komponenten (A) bis (C) und (F) in einem Molverhältnis von (A):(B):(C):(F) von 2,2 bis 1,8/1/0,5 bis 1,5/0 bis 0,5 eingesetzt werden.

5. Verfahren nach einem der vorhergehenden Ansprüche, dadurch gekennzeichnet, daß Komponente (E) in einer Menge von 5 bis 15 Gew.%, bezogen auf die Gesamtmenge der Komponenten (A) + (B) + (C) + (F) eingesetzt wird.

6. Verfahren nach einem der vorhergehenden Ansprüche, dadurch gekennzeichnet, daß Komponente (D) in einer Menge von 20 bis 200 Gew.%, bezogen auf die Gesamtmenge der Komponenten (A) + (B) + (C) + (E) + (F) verwendet wird.

7. Verfahren nach einem der vorhergehenden Ansprüche, dadurch gekennzeichnet, daß bei der Vorkondensatbildung entstehendes Wasser abgespaltenes Verkappungsmittel und überschüssiges Diol destillativ entfernt werden.

8. Verwendung der nach einem Verfahren gemäß einem der vorhergehenden Ansprüche hergestellten wäßrigen Elektroisolierlacke als Drahtlacke oder Tränklacke.

**Claims**

1. A process for the preparation of aqueous thermosetting electrical insulating varnishes based on polyester-imides, which are obtained by condensing aromatic tricarboxylic acid monoanhydrides, diamines, diols and triols containing an isocyanurate ring, with or without aromatic dicarboxylic acids or their esterifiable derivatives, wherein

(A) an aromatic tricarboxylic acid monoanhydride,

(B) an aromatic diamine,

(C) a triol containing an isocyanurate ring,

(D) an aliphatic diol, and

(E) a cyclic trimerization product of a diisocyanate, whose free isocyanate groups are blocked, with or without

(F) an aromatic dicarboxylic acid or its esterifiable derivataves

are co-condensed at from 120 to 240°C, water formed, blocking agents split off, and excess diol being removed by distillation; the precondensate thus obtained is reacted with or without the addition of from 1 to 10% by weight, based on polyester-imide precondensate of a polar organic solvent boiling at above 100°C under atmospheric pressure with ammonia or an organic amine at from 50 to 200°C; the product is then diluted with fully demineralized water to a viscosity of from about 100 to about 10,000 mPa.s; and, if desired, a water-soluble curing catalyst is added.

2. A process as claimed in claim 1, wherein tris--(2-hydroxyethyl)-isocyanurate is used as component (C).

3. A process as claimed in claim 1 or 2, wherein the cyclic trimerization product of toluylene diisocyanate, whose free isocyanate groups are blocked with phenol or cresol, is used as component(E).

4. A process as claimed in any of the preceding claims, wherein, in the preparation of the precondensate, components (A), (B), (C) and (F) are employed in a molar ratio of 2.2 - 1.8:1:0.5 - 1.5:0 - 0.5.

5. A process as claimed in any of the preceding claims, wherein component (E) is employed in an amount of from 5 to 15% by weight, based on the total amount of components (A) +(B) +(C)+ (F).

6. A process as claimed in any of the preceding claims, wherein component (D) is employed in an amount of from 20 to 200% by weight, based on the total amount of components (A)+(B)+(C)+(E)+(F).

7. A process as claimed in any of the preceding claims, wherein water formed in precondensate formation, blocking agents split off and excess diol are removed by distillation.

8. The use of an aqueous electrical insulating varnish, prepared by a process as claimed in any of the preceding claims, as a wire enamel or impregnating varnish.

**Revendications**

1.- Procédé de préparation de vernis aqueux thermodurcissables isolants de l'électricité, à base de polyester-imides qui ont été obtenus par condensation de monoanhydrides d'acides tricarboxyliques aromatiques, de diamines, de diols et de triols contenant un cycle isocyanurate ainsi que, le cas échéant, d'acides dicarboxyliques aromatiques ou de leurs dérivés estérifiables, caractérisé par le fait que l'on condense entre eux, à une température de 120 à 240° C,

(A) un monoanhydride d'acide tricarboxylique aromatique

(B) une diamine aromatique,

(C) un triol contenant un cycle isocyanurate,

(D) un diol aliphatique et

(E) un produit de trimérisation cyclique d'un diisocyanate dont les groupes isocyanate libres sont bloqués, et le cas échéant

(F) un acide dicarboxylique aromatique ou ses dérivés estérifiables,

en éliminant par distillation l'eau formée, l'agent bloquant libéré et l'excés de diol, on fait réagir le précondensat ainsi obtenu éventuellement après addition de 1 à 10% en poids, par rapport au precondensat de polyester-imide, d'un solvant organique polaire bouillant à plus de 100° C à pression normale, avec l'ammoniac ou une amine aromatique à une température de 50 à 200° C, puis on dilue par de l'eau entiérement déminéralisée à des viscosités d'environ 100 à 10 000 mPa.s et, le cas échéant on ajoute un catalyseur de durcissement soluble dans l'eau.

2.- Procédé selon la revendication 1, caractérisé par le fait que l'on utilise, en tant que composant (C), l'isocyanurate de tris-(2-hydroxyéthyle).

3.- Procédé selon la revendication 1 ou 2 caractérisé par le fait que l'on utilise, en tant que composant (E), le produit de trimérisation cyclique de toluylène-diisocyanate dont les groupes isocyanate libres sont bloqués par le phénul ou le crésol.

4.- Procédé selon l'une des revendications précédentes, caractérisé par le fait que, pour la préparation du précondensat, on met en oeuvre les composants (A) à (C) et (F) dans des proportions molaires (A): (B): (C): (F) de 2,2 à 1,8/1/0,5 à 1,5/0 à 0,5.

5.- Procédé selon l'une des revendication qui précèdent, caractérisé par le fait que l'on met en oeuvre le composé (E) en quantité de 5 à 15% en poids par rapport à la quantité totale des composants (A) + (B) + (C) + (F).

6.- Procédé selon l'une des revendications qui précèdent, caractérisé par le fait que l'on utilise le composant (D) en quantité de 20 à 200% en poids, par rapport à la quantite totale des composants (A) + (8) + (C) + (E) + (F).

7.- Procédé selon l'une des revendications précèdentes, caractérisé par le fait que, à la formation du précondensat, on élimine par distillation l'eau formée, l'agent bloquant libéré et l'excès de diol.

8.- Utilisation des vernis aqueux isolants de l'électricité préparés par un procedé selon l'une des revendications qui précèdent en tant que vernis pour fils ou vernis à appliquer par immersion. Nach dem erfindungsgemäßen Verfahren läßt sich auf einfache Weise ein Wasserlack mit hervorragenden Eigenschaften herstellen. Man erhält so ca. 45- bis 55%ige Lacklösungen, mit denen sich, z.B. nach Zugabe eines üblichen wasserlöslichen Härtungskatalysators, Kupferdrähte mittels üblicher Auftragssysteme und -vorrichtungen lackieren lassen.